# EUROPEAN PATENT APPLICATION

(11) **EP 2 749 797 A1**
(43) Date of publication of application: **02.07.2014**
(21) Application number: 12841052.9
(22) Date of filing: 03.10.2012
(51) Int. Cl.: F16J 15/447, F01D 11/02

(54) **SEAL DEVICE**

(30) Priority: 21.10.2011 JP 2011232159
(71) Applicant: Mitsubishi Heavy Industries, Ltd., Tokyo 108-8215 (JP); Mitsubishi Heavy Industries Compressor Corporation, Minato-ku Tokyo 108-0014 (JP)
(72) Inventor: NAKANIWA, Akihiro, Tokyo 108-8215 (JP); FUKAO, Shinji, Tokyo 108-8215 (JP)
(74) Representative: HOFFMANN EITLE
(86) International application number: PCT/JP2012/075674
(87) International publication number: WO 2013/058112

(57) **Abstract**

Provided is a seal device including: three ring-shaped first vertical wall portions (21) which extend toward a rotational body (12) from a stationary body (11) and are arranged at predetermined intervals in an axial center direction (A) of the rotational body (12); a ring-shaped second vertical wall portion (22) which extends toward the rotational body (12) from the stationary body (11) and is adjacent to the first vertical wall portions (21), the thickness of which is thicker than the first vertical wall portions (21); a ring-shaped protrusion portion (23) which faces the second vertical wall portion (22) and protrudes toward the stationary body (11) from the rotational body (12); and a plurality of swirl breaker chambers (24) which are arranged in the stationary body (11) at predetermined intervals in a circumferential direction of the rotational body (12) to face the protrusion portion (23). The seal device suppresses a flow between the stationary body and the rotational body and thus suppresses an unstable vibration of the rotational body to enable the improvement of sealing performance.

## Description

### Field

The present invention relates to a seal device which prevents leakage of a fluid between a stationary side and a rotational side.

### Background

In a fluid machine adapted to rotatably support a rotational body in a housing, a seal device is provided between the housing and the rotational body in order to prevent an axial leakage flow of the fluid between the housing and the rotational body. Moreover, a labyrinth seal is generally applied as the seal device. The labyrinth seal is configured in such a manner that a plurality of seal fins are provided in at least one side of a stationary side such as the housing or a rotational body side to generate pressure loss by a clearance formed between the seal fin and the stationary side or the rotational body side and can suppress the axial leakage flow of the fluid by the pressure loss, thus performing a seal function.

In the labyrinth seal, however, a swirling flow of the fluid occurs in the seal portion by a rotational motion of the rotational body to generate an exciting force in the seal portion, and thus there is a problem in that the rotational body is unstably vibrated by the exciting force. In order to solve this problem, for example, techniques disclosed in the following Patent Literatures have been proposed.

### Citation List

### Patent Literature

Patent Literature 1: Japanese Patent Application Laid-open No. 58-143104
Patent Literature 2: Japanese Patent Application Laid-open No. 59-000505
Patent Literature 3: Japanese Patent Application Laid-open No. 2008-128275

### Summary

### Technical Problem

In the above Patent Literatures, a plate is provided in a seal fin to suppress a swirling flow. However, it is difficult to effectively suppress the swirling flow, which occurs in a seal portion, only by providing the swirling flow suppressing plate in the seal fin.

The invention is intended to solve the above-described problem and to provide a seal device which can suppress a flow between a stationary body and a rotational body to suppress an unstable vibration of the rotational body and improve sealing performance.

### Solution to Problem

According to an aspect of the present invention, a seal device which is provided between a stationary body and a rotational body to suppress a flow of a fluid includes: a plurality of ring-shaped first vertical wall portions which extend from any one of the stationary body and the rotational body to the other side and are arranged at predetermined intervals in an axial center direction of the rotational body; a ring-shaped second vertical wall portion which extends from any one of the stationary body and the rotational body to the other side as in the first vertical wall portions and is adjacent to the first vertical wall portions, the thickness of which is thicker than the first vertical wall portions in the axial center direction of the rotational body; a ring-shaped protrusion portion which corresponds to the second vertical wall portion and protrudes toward the stationary body from the rotational body; and a plurality of swirl breaker chambers which are arranged in the stationary body at predetermined intervals in a circumferential direction of the rotational body to face the protrusion portion.

Therefore, when the rotational body rotates with respect to the stationary body, the fluid flowing therebetween flows to the protrusion portion through the clearance between the first vertical wall portion and the stationary body or the rotational body and is guided to the protrusion portion to flow to an outer side in the radial direction and thus enter into the swirl breaker chamber; the axial center direction component and the swirling direction component of the fluid are attenuated by the swirl breaker chamber, and thus the fluid speed is reduced; and the flow between the stationary body and the rotational body can be suppressed, thereby it is possible to suppress the unstable vibration of the rotational body and improve the sealing performance.

Advantageously, in the seal device, the swirl breaker chamber is provided at a downstream side from the first vertical wall portion of the uppermost stream side in a flow direction of the fluid flowing between the stationary body and the rotational body in the axial center direction of the rotational body.

Accordingly, since the swirl breaker chamber is provided at the downstream side from the first vertical wall portion, the fluid passing through the clearance between the first vertical wall portion and the stationary body or the rotational body appropriately flows to the swirl breaker chamber by the protrusion portion, thereby it is possible to attenuate the axial center direction component and the swirling direction component.

Advantageously, in the seal device, the swirl breaker chamber is opened toward the protrusion portion and is also opened toward the first vertical wall portion of the uppermost stream side.

Therefore, since the swirl breaker chamber is opened to the upstream side in the flow direction of the fluid, the fluid guided outward by the protrusion portion can appropriately flow to the swirl breaker chamber.

Advantageously, in the seal device, a length in a radial direction of the protrusion portion is set to be not less than a clearance between a tip end of the first vertical wall portion and the stationary body or the rotational body in the radial direction.

Accordingly, since the length in the radial direction of the protrusion portion is defined, the fluid passing through the clearance between the first vertical wall portion and the stationary body or the rotational body is appropriately guided to the protrusion portion, and thus the fluid can flow to the swirl breaker chamber by the protrusion portion.

Advantageously, in the seal device, a length in a circumferential direction of the swirl breaker chamber is set to be substantially equal to a distance between the swirl breaker chambers in the circumferential direction.

Accordingly, since the length and clearance in the circumferential direction of the swirl breaker chamber are defined, it is possible to appropriately attenuate the swirling direction component of the fluid entering into the swirl breaker chamber.

Advantageously, in the seal device, the first vertical wall portion and the second vertical wall portion are provided in the stationary body side, the second vertical wall portion is set to be shorter than the first vertical wall portion in the radial direction, and the protrusion portion is arranged so as to face the second vertical wall portion.

Therefore, it is possible to simplify the configuration of the rotational body side.

Advantageously, in the seal device, the first vertical wall portion and the second vertical wall portion are provided in the rotational body side, and the protrusion portion is provided at a tip end of the second vertical wall portion so that the second vertical wall portion is set to be longer than the first vertical wall portion in the radial direction.

Accordingly, it is possible to simplify the configuration of the stationary body side.

### Advantageous Effects of Invention

According to the seal device of the invention, since the seal device is provided with the plurality of ring-shaped first vertical wall portions, the ring-shaped second vertical wall portion which is adjacent to the first vertical wall portions and is thicker than the first vertical wall portion in the axial center direction, the ring-shaped protrusion portion which corresponds to the second vertical wall portion and protrudes from the rotational body, and the plurality of swirl breaker chambers which are arranged in the stationary body at predetermined intervals in the circumferential direction so as to face the protrusion portion, the leakage flow between the stationary body and the rotational body is suppressed in the axial center direction and the swirling direction, thereby it is possible to suppress the unstable vibration of the rotational body and thus improve the sealing performance.

### Brief Description of Drawings

FIG. 1 is a schematic view of a seal device according to a first embodiment of the invention.
FIG. 2 is a cross-sectional view illustrating the seal device of the first embodiment.
FIG. 3 is a diagram schematically illustrating a relation between a vertical wall portion and a protrusion portion in the seal device of the first embodiment.
FIG. 4 is a cross-sectional view illustrating a working of the seal device of the first embodiment.
FIG. 5 is a graph illustrating a circumferential speed relative to an axial position of the seal device.
FIG. 6 is a cross-sectional view illustrating a seal device according to a second embodiment of the invention. Description of Embodiments

Hereinafter, preferred embodiments of a seal device according to the invention will be described in detail with reference to the accompanied drawings. Further, the invention is not limited to these embodiments, but may be intended to include the combination of each embodiment when numerous embodiments are present.

### First Embodiment

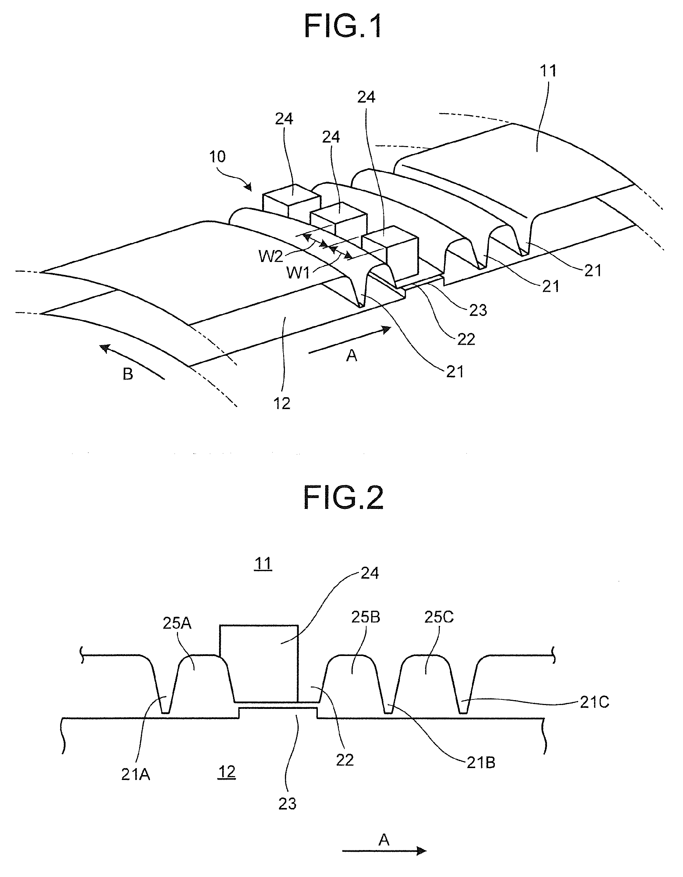

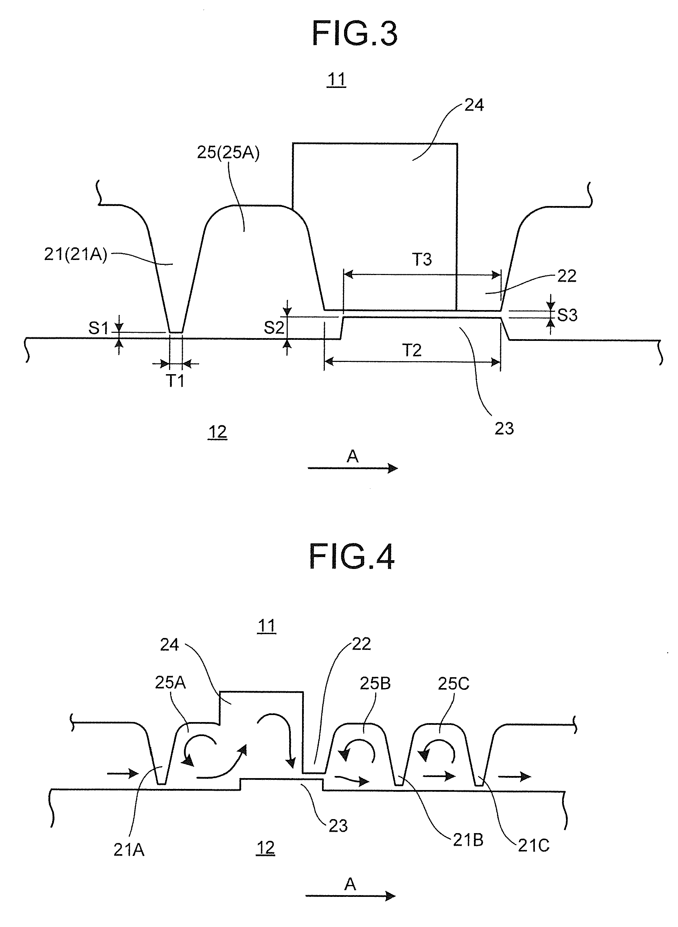

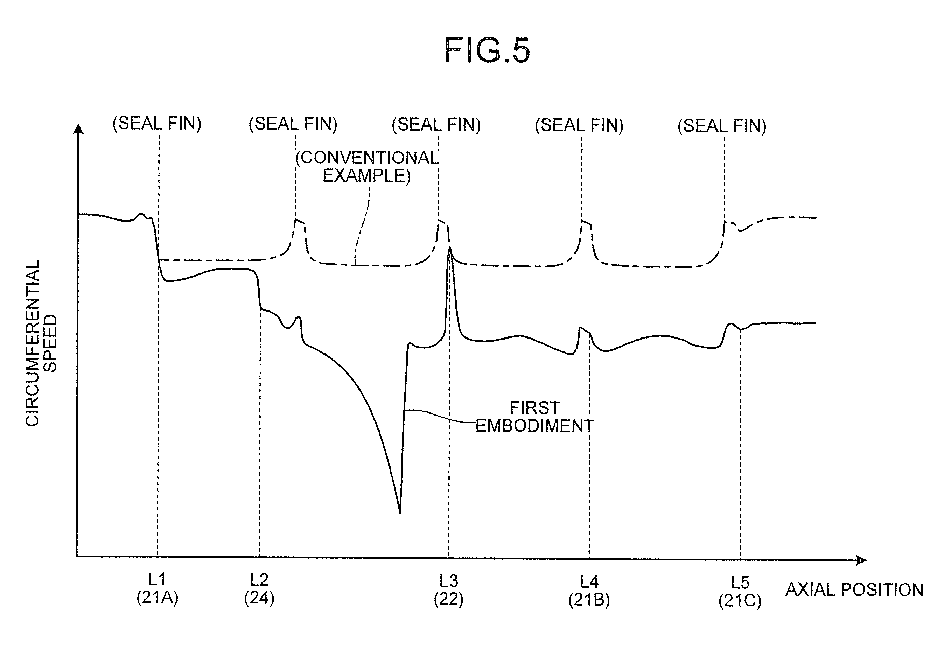

FIG. 1 is a schematic view of a seal device according to a first embodiment of the invention; FIG. 2 is a cross-sectional view illustrating the seal device of the first embodiment; FIG. 3 is a diagram schematically illustrating a relation between a vertical wall portion and a protrusion portion in the seal device of the first embodiment; FIG. 4 is a cross-sectional view illustrating a working of the seal device of the first embodiment; and FIG. 5 is a graph illustrating a circumferential speed relative to an axial position of the seal device.

In the first embodiment, as illustrated in FIGS. 1 and 2, a seal device 10 is provided between a stationary body 11 and a rotational body 12 to suppress a flow (leakage) of a fluid which flows between the stationary body 11 and the rotational body 12 in an axial center direction A and a circumferential direction B of the rotational body 12. The seal device 10 has a labyrinth seal structure as a basic structure to improve sealing performance by effectively applying a swirl breaker (swirling prevention) structure.

That is, the seal device 10 includes a plurality of first vertical wall portions 21 and a second vertical wall portion 22 which are provided in the stationary body 11, a protrusion portion 23 which is provided in the rotational body 12, and a plurality of swirl breaker chambers 24 which are provided in the stationary body 11.

The first vertical wall portion 21 is formed in a ring shape which extends toward an outer periphery of the rotational body 12 from an inner periphery of the stationary body 11, the thickness thereof gradually becomes thinner from the stationary body 11 toward the rotational body 12, and a predetermined clearance is secured between a tip end of the first vertical wall portion and the outer periphery of the rotational body 12 in a radial direction. The plurality of first vertical wall portions 21, for example, three first vertical wall portions 21 (21A, 21B, and 21C) in the first embodiment are arranged along the axial center direction A, which is a flow direction of the fluid, at predetermined intervals.

The second vertical wall portion 22 is formed in a ring shape which extends toward the outer periphery of the rotational body 12 from the inner periphery of the stationary body 11 and the thickness thereof gradually becomes thinner from the stationary body 11 toward the rotational body 12. The second vertical wall portion 22 is adjacent to three first vertical wall portions 21 (21A, 21B, and 21C) arranged along the axial center direction A which is the flow direction of the fluid and is arranged therebetween, that is, between the downstream side from the first vertical wall portion 21A of the uppermost upstream side and the upstream side from the first vertical wall portion 21B of the second stage in the flow direction of the fluid (axial center direction A). Then, the thickness of the tip end of the second vertical wall portion 22 is set to be thicker than that of the tip end of the first vertical wall portion 21 in the axial center direction A.

The protrusion portion 23 is formed in a ring shape which faces the second vertical wall portion 22 and protrudes toward the inner periphery of the stationary body 11 from the outer periphery of the rotational body 12, and a predetermined clearance is secured between the tip end (outer periphery) of the protrusion portion 23 and the inner periphery of the stationary body 11, specifically the tip end (inner periphery) of the second vertical wall portion 22 in a radial direction. For this reason, the length in the radial direction of the second vertical wall portion 22 is set to be shorter than the length in the radial direction of the first vertical wall portion 21, and the protrusion portion 23 is arranged so as to face the second vertical wall portion 22.

The plurality of swirl breaker chambers 24 are chambers which are formed in the stationary body 11 at predetermined intervals in the circumferential direction B of the rotational body 12 to face the protrusion portion 23. The swirl breaker chamber 24 is formed in a substantially cubic shape, which is opened toward the protrusion portion 23 of the rotational body 12 and is also opened toward the first vertical wall portion 21A of the uppermost upstream side in the flow direction of the fluid (axial center direction A).

In this case, spaces 25 (25A, 25B, and 25C) having substantially the same shape are formed between the first vertical wall portion 21A and the second vertical wall portion 22, between the second vertical wall portion 22 and the first vertical wall portion 21B, and between the first vertical wall portion 21B and the first vertical wall portion 21C, respectively. That is, the distance between a rear end of the first vertical wall portion 21A and a front end of the second vertical wall portion 22, the distance between a rear end of the second vertical wall portion 22 and a front end of the first vertical wall portion 21B, and the distance between a rear end of the first vertical wall portion 21B and a front end of the first vertical wall portion 21C are substantially the same.

In addition, the swirl breaker chamber 24 of the stationary body 11 side faces the protrusion portion 23 of the rotational body 12 side in the radial direction, but is arranged away from the first vertical wall portion 21A side of the uppermost upstream side in the flow direction of the fluid (axial center direction A) so as to be opened to the space 25A.

Then, as illustrated in FIG. 3, when the thickness of the tip end in the first vertical wall portion 21 is T1 and the thickness of the tip end in the second vertical wall portion 22 is T2, the thickness T2 of the tip end in the second vertical wall portion 22 is set to be thicker than the thickness T1 of the tip end in the first vertical wall portion 21 (T1 < T2). In addition, when the thickness of the protrusion portion 23 is T3, the thickness T3 of the protrusion portion 23 is set to be equal to or thinner than the thickness T2 of the tip end in the second vertical wall portion 22 (T3 ≤ T2).

Further, when the clearance between the tip end of the first vertical wall portion 21 and the outer periphery of the rotational body 12 in the radial direction is S1 and the length in the radial direction of the protrusion portion 23 is S2, the length S2 in the radial direction of the protrusion portion 23 is set to be not less than the clearance S1 between the tip end of the first vertical wall portion 21 and the rotational body 12 in the radial direction. In this case, it is preferable that the length S2 in the radial direction of the protrusion portion 23 be set to be more than twice the clearance S1 between the tip end of the first vertical wall portion 21 and the rotational body 12 in the radial direction. Further, the clearance S1 between the tip end of the first vertical wall portion 21 and the rotational body 12 in the radial direction and the clearance S3 between the tip end of the second vertical wall portion 22 and the protrusion portion 23 in the radial direction have substantially the same length (distance) (S1 = S3).

Further, as illustrated in FIGS. 1 and 2, the swirl breaker chambers 24 are formed in the stationary body 11 at equal intervals in the circumferential direction B of the rotational body 12, and a length (width) W1 thereof in the circumferential direction is set to be substantially equal to a distance (clearance) W2 between the swirl breaker chambers 24.

Therefore, as illustrated in FIG. 4, in a state where the rotational body 12 rotates with respect to the stationary body 11, the fluid flowing between the stationary body 11 and the rotational body 12 has an axial center direction component along the axial center direction A of the rotational body 12 and a swirling direction component along the circumferential direction B. The fluid reaches the space 25A through the clearance S1 between the tip end of the first vertical wall portion 21A in the stationary body 11 and the outer periphery of the rotational body 12. Here, the fluid collides with an upstream-side end face of the protrusion portion 23 in the rotational body 12 to flow to the outside of the rotational body 12, thereby some become a swirling flow within the space 25A, while the others enter into the swirl breaker chamber 24.

Thus, in the swirl breaker chamber 24, the axial center direction component of the fluid along the axial center direction A of the rotational body 12 is attenuated by a collision with a wall surface of a front (downstream side in the axial center direction A) and the swirling direction component of the fluid along the circumferential direction B is attenuated by a collision with a side wall surface. Then, the fluid flows through the clearance S3 between the tip end of the second vertical wall portion 22 in the stationary body 11 and the outer periphery of the protrusion portion 23 of the rotational body 12 to the space 25B from the swirl breaker chamber 24.

In addition, the fluid is sealed by the first vertical wall portions 21A, 21B, and 21C and the second vertical wall portion 22, which function as a labyrinth seal, and is reduced in flow rate.

Changes in fluid speed due to the seal device 10 of the present embodiment will be described below. The graph illustrated in FIG. 5 represents the circumferential speed relative to each position in the axial direction of the seal device 10. In a seal device having five conventional seal fins (corresponding to the vertical wall portion of the invention) represented by a dashed-dotted line, the circumferential speed of the fluid is reduced at the position of each seal fin, but is not sufficiently reduced as a result. Thus, since the circumferential speed (swirling direction component) of the fluid is not sufficiently reduced, an exciting force acts on the rotational body, and thus an unstable vibration occurs in the rotational body.

Meanwhile, in the seal device 10 of the first embodiment represented by a solid line, the first vertical wall portion 21A, the swirl breaker chamber 24, the second vertical wall portion 22, the first vertical wall portion 21B, and the first vertical wall portion 21C are located at positions L1 to L5, and the circumferential speed of the fluid is reduced at each of the positions L1 to L5. Particularly, the circumferential speed of the fluid is significantly reduced by the swirl breaker chamber 24 from the position L1 to just before the position L3. Thus, since the circumferential speed of the fluid is sufficiently reduced, the exciting force acting on the rotational body 12 is decreased, and thus the occurrence of the unstable vibration is suppressed. That is, the seal device 10 of the first embodiment can significantly reduce stiffness coefficient which is a cause of the unstable vibration.

As described above, the seal device of the first embodiment is provided with three ring-shaped first vertical wall portions 21 (21A, 21B, and 21C) which extend toward the rotational body 12 from the stationary body 11 and are arranged in the axial center direction A of the rotational body 12 at predetermined intervals; the ring-shaped second vertical wall portion 22 which extends toward the rotational body 12 from the stationary body 11 and is adjacent to the first vertical wall portions 21, the thickness of which is thicker than the first vertical wall portions 21; the ring-shaped protrusion portion 23 which faces the second vertical wall portion 22 and protrudes toward the stationary body 11 from the rotational body 12; and the plurality of swirl breaker chambers 24 which are arranged in the stationary body 11 at predetermined intervals in the circumferential direction B of the rotational body 12 so as to face the protrusion portion 23.

Therefore, when the rotational body 12 rotates with respect to the stationary body 11, the fluid flowing therebetween flows to the downstream side through the clearance between the first vertical wall portion 21A and the rotational body 12 and is guided by the collision with the protrusion portion 23 to flow to an outer side in the radial direction and thus enter into the swirl breaker chamber 24. In the swirl breaker chamber 24, the axial center direction component and the swirling direction component of the fluid are attenuated by an inner wall of the swirl breaker chamber 24, and thus the fluid speed is reduced. When the speed of the fluid flowing between the stationary body 11 and the rotational body 12 is reduced, the leakage flow between the stationary body 11 and the rotational body 12 can be suppressed and the swirling direction component is also attenuated, thereby it is possible to suppress the unstable vibration of the rotational body 12 and improve the sealing performance.

Further, in the seal device of the first embodiment, the swirl breaker chamber 24 is provided at the downstream side from the first vertical wall portion 21A of the uppermost upstream side in the flow direction of the fluid which flows between the stationary body 11 and the rotational body 12 in the axial center direction A of the rotational body 12. Accordingly, the fluid passing through the clearance between the first vertical wall portion 21A and the rotational body 12 can appropriately flow to the swirl breaker chamber 24 by the protrusion portion 23 to attenuate the axial center direction component and the swirling direction component of the fluid.

In the seal device of the first embodiment, further, the swirl breaker chamber 24 is opened toward the protrusion portion 23 and is opened toward the first vertical wall portion 21A of the uppermost upstream side at the same time. Accordingly, the fluid, which passes through the clearance between the first vertical wall portion 21A and the rotational body 12 and is guided by the protrusion portion 23, can appropriately flow to the swirl breaker chamber 24 from the opening.

In the seal device of the first embodiment, further, the length in the radial direction of the protrusion portion 23 is set to be not less than the clearance between the tip end of the first vertical wall portion 21 and the rotational body 12 in the radial direction. Accordingly, the fluid, which passes through the clearance between the first vertical wall portion 21A and the rotational body 12, can be appropriately guided to the protrusion portion 23 to flow to the swirl breaker chamber 24 by the protrusion portion 23.

In the seal device of the first embodiment, further, the length in the circumferential direction of the swirl breaker chamber 24 is set to be substantially equal to the distance between the swirl breaker chambers 24. Accordingly, it is possible to appropriately attenuate the swirling direction component of the fluid entering into the swirl breaker chamber 24 and to reduce the speed by defining the length and clearance in the circumferential direction of the swirl breaker chamber 24.

### Second Embodiment

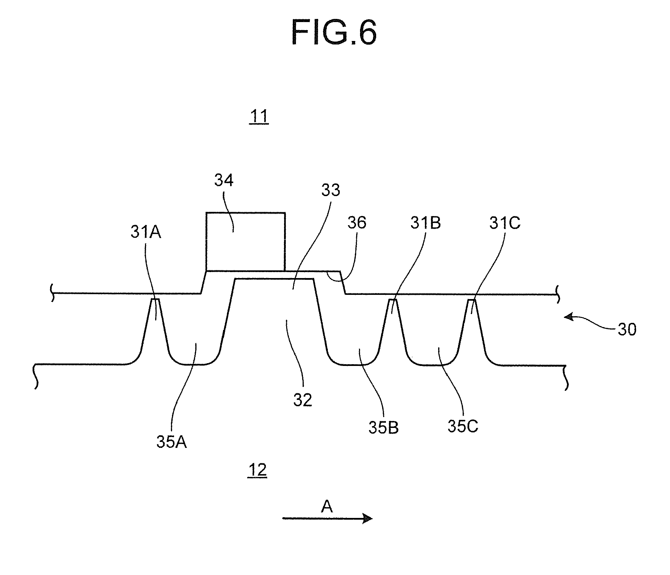

FIG. 6 is a cross-sectional view illustrating a seal device according to a second embodiment of the invention. Further, the members having the same function as in the first embodiment will be denoted by the same reference numerals and the detailed description thereof will not be provided.

In the second embodiment, as illustrated in FIG. 6, a seal device 30 is provided between a stationary body 11 and a rotational body 12 to suppress a flow (leakage) of a fluid which flows between the stationary body 11 and the rotational body 12 in the axial center direction A and the circumferential direction B (see FIG. 1) of the rotational body 12. The seal device 30 has a labyrinth seal structure as a basic structure to improve the sealing performance by effectively applying the swirl breaker structure.

That is, the seal device 30 includes a plurality of first vertical wall portions 31 and a second vertical wall portion 32 which are provided in the rotational body 12, a protrusion portion 33 which is provided in the rotational body 12, and a plurality of swirl breaker chambers 34 which are provided in the stationary body 11.

The first vertical wall portion 31 is formed in a ring shape which extends toward an inner periphery of the stationary body 11 from an outer periphery of the rotational body 12, the thickness thereof gradually becomes thinner from the rotational body 12 toward the stationary body 11, and a predetermined clearance is secured between a tip end of the first vertical wall portion and the inner periphery of the stationary body 11. The plurality of first vertical wall portions 31, for example, three first vertical wall portions 31 (31A, 31B, and 31C) in the second embodiment are arranged along the axial center direction A, which is a flow direction of the fluid, at predetermined intervals.

The second vertical wall portion 32 is formed in a ring shape which extends toward the inner periphery of the stationary body 11 from the outer periphery of the rotational body 12 and the thickness thereof gradually becomes thinner from the rotational body 12 toward the stationary body 11. The second vertical wall portion 32 is adjacent to three first vertical wall portions 31 (31A, 31B, and 31C) arranged along the axial center direction A which is the flow direction of the fluid and is arranged therebetween, that is, between the downstream side from the first vertical wall portion 31A of the uppermost upstream side and the upstream side from the first vertical wall portion 31B of the second stage in the flow direction of the fluid (axial center direction A). Then, the thickness of the tip end of the second vertical wall portion 32 is set to be thicker than that of the tip end of the first vertical wall portion 31 in the axial center direction A.

The protrusion portion 33 is provided integrally with the tip end of the second vertical wall portion 32 to correspond to the second vertical wall portion 32 and is formed in the ring shape which protrudes toward the inner periphery of the stationary body 11 from the tip end of the second vertical wall portion 32.

The plurality of swirl breaker chambers 34 are chambers which are formed in the stationary body 11 at predetermined intervals in the circumferential direction B of the rotational body 12 to face the protrusion portion 33 (second vertical wall portion 32). The swirl breaker chamber 34 is formed in a substantially cubic shape, which is opened toward the protrusion portion 33 of the rotational body 12.

In this case, the stationary body 11 is provided with a recessed portion 36, which faces the protrusion portion 33 (second vertical wall portion 32) and is formed in a ring shape in the inner periphery of the stationary body, and the protrusion portion 33 of the tip end of the second vertical wall portion 32 is entered into the recessed portion 36. Then, a predetermined interval is secured between the tip end (outer periphery) of the second vertical wall portion 32 (protrusion portion 33) and the inner periphery of the stationary body 11. Thus, the length in the radial direction of the second vertical wall portion 32 and the protrusion portion 33 is set to be longer than that of the first vertical wall portion 31.

In addition, spaces 35 (35A, 35B, and 35C) having substantially the same shape are formed between the first vertical wall portion 31A and the second vertical wall portion 32, between the second vertical wall portion 32 and the first vertical wall portion 31B, and between the first vertical wall portion 31B and the first vertical wall portion 31C, respectively. That is, the distance between a rear end of the first vertical wall portion 31A and a front end of the second vertical wall portion 32, the distance between a rear end of the second vertical wall portion 32 and a front end of the first vertical wall portion 31B, and the distance between a rear end of the first vertical wall portion 31B and a front end of the first vertical wall portion 31C are substantially the same. Then, the length in the axial center direction A of the recessed portion 36 of the stationary body 11 is longer than that of the protrusion portion 33 (second vertical wall portion 32) of the rotational body 12, and the front end of the recessed portion 36 is communicated with the space 35A and the rear end thereof is communicated with the space 35B.

In addition, the swirl breaker chamber 34 of the stationary body 11 side faces the protrusion portion 33 of the rotational body 12 side in the radial direction, but is arranged away from the first vertical wall portion 31A side of the uppermost upstream side in the flow direction of the fluid (axial center direction A) so as to be opened to the space 35A.

Then, as in the first embodiment, the thickness of the tip end in the second vertical wall portion 32 is set to be thicker than the thickness of the tip end in the first vertical wall portion 31. Further, the length (clearance) between the tip end of the first vertical wall portion 31 and the stationary body 11 and the clearance between the tip end of the second vertical wall portion 32 (protrusion portion 33) and the recessed portion 36 have substantially the same length.

Therefore, in a state where the rotational body 12 rotates with respect to the stationary body 11, the fluid flowing between the stationary body 11 and the rotational body 12 reaches the space 35A through the clearance between the tip end of the first vertical wall portion 31A in the rotational body 12 and the inner periphery of the stationary body 11. Here, the fluid collides with an upstream-side end face of the second vertical wall portion 32 and the protrusion portion 33 in the rotational body 12 to flow to the outside of the rotational body 12, thereby some become a swirling flow within the space 35A, while the others enter into the swirl breaker chamber 34.

Thus, in the swirl breaker chamber 34, the axial center direction component of the fluid along the axial center direction A of the rotational body 12 is attenuated by a collision with a wall surface of a front (downstream side in the axial center direction A) and the swirling direction component of the fluid along the circumferential direction B is attenuated by a collision with a side wall surface. Then, the fluid flows through the clearance between the tip end of the protrusion portion 33 in the rotational body 12 and the inner periphery of the recessed portion 36 of the stationary body 11 to the space 35B from the swirl breaker chamber 34.

In addition, the fluid is sealed by the first vertical wall portions 31A, 31B, and 31C and the second vertical wall portion 32, which function as a labyrinth seal, and the protrusion portion 33 and is reduced in flow rate.

As described above, the seal device of the second embodiment is provided with three ring-shaped first vertical wall portions 31 (31A, 31B, and 31C) which extend toward the stationary body 11 from the rotational body 12 and are arranged in the axial center direction A of the rotational body 12 at predetermined intervals; the ring-shaped second vertical wall portion 32 which extends toward the stationary body 11 from the rotational body 12 and is adjacent to the first vertical wall portions 31, the thickness of which is thicker than the first vertical wall portions 31; the ring-shaped protrusion portion 33 which protrudes toward the stationary body 11 in the tip portion of the second vertical wall portion 32; and the plurality of swirl breaker chambers 34 which are arranged in the stationary body 11 at predetermined intervals in the circumferential direction B of the rotational body 12 so as to face the protrusion portion 33.

Therefore, when the rotational body 12 rotates with respect to the stationary body 11, the fluid flowing therebetween flows to the downstream side through the clearance between the first vertical wall portion 31A and the stationary body 11 and is guided by the collision with the protrusion portion 33 to flow to an outer side in the radial direction and thus enter into the swirl breaker chamber 34. In the swirl breaker chamber 34, the axial center direction component and the swirling direction component of the fluid are attenuated by an inner wall of the swirl breaker chamber 34, and thus the fluid speed is reduced. When the speed of the fluid flowing between the stationary body 11 and the rotational body 12 is reduced, the leakage flow between the stationary body 11 and the rotational body 12 can be suppressed and the swirling direction component is also attenuated, thereby it is possible to suppress the unstable vibration of the rotational body 12 and improve the sealing performance.

Further, in each embodiment described above, the second vertical wall portions 22 and 32, the protrusion portions 23 and 33, and the swirl breaker chambers 24 and 34 are arranged between the downstream side from the first vertical wall portions 21A and 31A of the uppermost upstream side and the upstream side from the first vertical wall portions 21B and 31B of the second stage in the axial center direction A which is the flow direction of the fluid, but the positions thereof are not limited thereto. That is, the second vertical wall portions 22 and 32, the protrusion portions 23 and 33, and the swirl breaker chambers 24 and 34 may be arranged anywhere at the downstream side from the first vertical wall portions 21A, 21B, 21C, 31A, 31B, and 31C, unless being arranged at the upstream side from the first vertical wall portions 21A and 31A of the uppermost upstream side in the axial center direction A which is the flow direction of the fluid.

Further, each embodiment described above is provided with three first vertical wall portions 21A, 21B, and 21C or 31A, 31B, and 31C, one second vertical wall portion 22 or 32, one protrusion portion 23 or 33, and one swirl breaker chamber 24 or 34, but the number thereof is not limited thereto. Two or four or more first vertical wall portions, two or more second vertical wall portions, two or more protrusion portions, and two or more swirl breaker chambers may be provided. In this case, two or more second vertical wall portions, two or more protrusion portions, and two or more swirl breaker chambers may be provided in a continuous state or be provided between the plurality of first vertical wall portions.

Further, in each embodiment described above, the swirl breaker chambers 24 and 34 are formed in the cubic shape, but are not limited thereto and may be formed in a cuboid shape or may be formed in, for example, a hollow cylindrical shape or a hollow polygonal shape which is long in the radial direction of the rotational body 12.

Further, in each embodiment described above, the first vertical wall portions 21A, 21B, and 21C or 32A, 31B, and 31C and the second vertical wall portion 22 or 32 are provided in one of the stationary body 11 and the rotational body 12, but may be provided in both of them. That is, the configuration of the labyrinth seal is not limited to each embodiment.

Further, each embodiment described above is configured such that the first vertical wall portions 21A, 21B, and 21C or 32A, 31B, and 31C, the second vertical wall portion 22 or 32, the protrusion portion 23 or 33, and the swirl breaker chamber 24 or 34 are directly provided in the stationary body 11 or the rotational body 12, but may be configured in such a manner that one or two or more seal members, which are provided with the first vertical wall portion, the second vertical wall portion, the protrusion portion, and the swirl breaker chamber and are formed separately from the stationary body or the rotational body, are fixed to the stationary body or the rotational body.

### Reference Signs List

- 10, 30: SEAL DEVICE
- 11: STATIONARY BODY
- 12: ROTATIONAL BODY
- 21, 21A, 21B, 21C, 31, 31A, 31B, 31C: FIRST VERTICAL WALL PORTION
- 22, 32: SECOND VERTICAL WALL PORTION
- 23, 33: PROTRUSION PORTION
- 24, 34: SWIRL BREAKER CHAMBER
- 25, 25A, 25B, 25C, 35, 35A, 35B, 35C: SPACE
- 36: RECESSED PORTION

## Claims

1. A seal device which is provided between a stationary body and a rotational body to suppress a flow of a fluid, the seal device comprising:
a plurality of ring-shaped first vertical wall portions which extend from any one of the stationary body and the rotational body to the other side and are arranged at predetermined intervals in an axial center direction of the rotational body;
a ring-shaped second vertical wall portion which extends from any one of the stationary body and the rotational body to the other side as in the first vertical wall portions and is adjacent to the first vertical wall portions, the thickness of which is thicker than the first vertical wall portions in the axial center direction of the rotational body;
a ring-shaped protrusion portion which corresponds to the second vertical wall portion and protrudes toward the stationary body from the rotational body; and
a plurality of swirl breaker chambers which are arranged in the stationary body at predetermined intervals in a circumferential direction of the rotational body to face the protrusion portion.

2. The seal device according to claim 1, wherein the swirl breaker chamber is provided at a downstream side from the first vertical wall portion of the uppermost stream side in a flow direction of the fluid flowing between the stationary body and the rotational body in the axial center direction of the rotational body.

3. The seal device according to claim 2, wherein the swirl breaker chamber is opened toward the protrusion portion and is also opened toward the first vertical wall portion of the uppermost stream side.

4. The seal device according to any one of claims 1 to 3, wherein a length in a radial direction of the protrusion portion is set to be not less than a clearance between a tip end of the first vertical wall portion and the stationary body or the rotational body in the radial direction.

5. The seal device according to any one of claims 1 to 4, wherein a length in a circumferential direction of the swirl breaker chamber is set to be substantially equal to a distance between the swirl breaker chambers in the circumferential direction.

6. The seal device according to any one of claims 1 to 5, wherein the first vertical wall portion and the second vertical wall portion are provided in the stationary body side, the second vertical wall portion is set to be shorter than the first vertical wall portion in the radial direction, and the protrusion portion is arranged so as to face the second vertical wall portion.

7. The seal device according to any one of claims 1 to 5, wherein the first vertical wall portion and the second vertical wall portion are provided in the rotational body side, and the protrusion portion is provided at a tip end of the second vertical wall portion so that the second vertical wall portion is set to be longer than the first vertical wall portion in the radial direction.
